# EUROPEAN PATENT SPECIFICATION

(11) **EP 2 696 622 B1**
(45) Date of publication and mention of the grant of the patent: **22.04.2020**
(21) Application number: 12005771.6
(22) Date of filing: 08.08.2012
(51) Int. Cl.: H04W 28/08

(54) **Handling an overload situation in a cellular network**
Handhabung einer Überlastsituation in einem zellularen Netzwerk
Gestion d'une situation de surcharge dans une réseau cellulaire

(43) Date of publication of application: 12.02.2014
(73) Proprietor: Telefónica Germany GmbH & Co. OHG, 80992 München (DE)
(72) Inventor: Leth-Espensen, Mads, 82110 Germering (DE); Müllner, Robert, 81479 München (DE); Neef, Wolfgang, 82194 Gröbenzell (DE)
(74) Representative: Herrmann, Uwe

(56) References cited:
- EP-A1- 2 395 701
- EP-A1- 2 696 622
- EP-A2- 1 161 113
- EP-A2- 1 689 207
- WO-A1-2006/037378
- WO-A1-2008/096162
- US-A1- 2008 151 770
- US-A1- 2008 242 301
- VELAYOS H ET AL: "Load balancing in overlapping wireless LAN cells", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, vol. 7, 20 June 2004 (2004-06-20), pages 3833-3836, XP010712397, DOI: 10.1109/ICC.2004.1313270 ISBN: 978-0-7803-8533-7

## Description

The present invention is related to a method for handling an overload situation in a mobile cellular network.

One of the most challenging requirements in the design of mobile networks is the handling of overload situations. The occurrence of overload is in many cases not predictable, neither in time nor in place. To combat overload in a cell, state of the art technologies use load defence strategies such as load dependent sharing of resources among several users or shifting traffic to neighbouring cell. These mechanisms are well suited for temporary overload situations in which the actual traffic demand slightly exceeds the maximum capacity of the cell. The use of these strategies allows dimensioning of mobile networks in a most economic way, since only as much capacity needs to be provided as necessary to serve usual busy hour traffic. Additional traffic beyond that amount is distributed to other cells and will not be lost. This strategy is beneficial for handling unexpected traffic peaks without the need to oversize the network. It is applied in most of today's mobile networks.

However, this strategy fails if the traffic demand is substantially higher than the provided capacity, if overload does not occur temporarily or is not restricted to a single cell or a small cluster of cells. Typical situations are traffic jams, gatherings as they occur at conventions or open-air concerts, emergency situations or disasters in which a huge number of users try to establish mobile services at the same time. These situations lead to blocking probabilities significantly higher than the usually accepted value of 1% and result in user dissatisfaction.

In 3rd Generation Partnership Project (3GPP) mobile networks of the Second Generation (2G), Third Generation (3G) or Fourth Generation (4G / Long Term Evolution (LTE)) a circuit-switched (CS) traffic channel (2G/3G) or packet-switched (PS) resources (2G/3G/LTE) are assigned after an initial signalling phase. In the above described situations, blocking typically occurs already during this signalling phase and hence access to the network is not possible. In multi Radio Access Technology (multi-RAT) networks, load balancing between 2G, 3G and 4G/LTE networks is applied by shifting traffic in case of congestion of a cell of a first technology to another cell using a second or third technology. This functionality can be applied for congestion of both physical traffic channels and signalling channels.

To provide access for high-priority users also during situations of congestion, pre-emption features such as enhanced Multi-Level Precedence and Pre-emption (eMLPP) are applied. This solution, however, is restricted to congestion on the traffic channels but not on signalling channels. In the described situations the huge amount of traffic on the signalling channels prevents access to the network also for high-priority subscribers. To overcome this situation, the source of the problem, i.e. the number of access requests has to be reduced.

An effective measure to reduce the number of terminals that might request access in a cell is to temporarily hide the network, i.e. to pretend a coverage hole. This situation is indicated to the user by displaying "no network available" on the terminal and the mobile does neither generate signalling traffic, nor obtain access to the network. The drawback of systems representing the current state of technology is the limitation of the trigger conditions for hiding the network to a few events. Those are not enough to fully recognise and satisfactorily handle overload situations in today's mobile networks with a high heterogeneity of service types.

The published document Velayos H et al: "Load balancing in overlapping wireless LAN cells", 2004 IEEE International Conference on Communications; ICC 2004; 20 - 24 June 2004, Paris, IEEE Operations Centre, Piscataway; NJ, USA, vol. 7, 20 June 2004 (2004-06-20), pages 3833-3836, teaches a load balancing scheme for overlapping wireless LAN cells. Agents running in each access point periodcally broacast the local load level via the isanet backbone and determine whether the access point is overloaded, balanced or underloaded by comparing it to received reports. In order to balance the current load situation within the system overloaded access points will force handoffs of some station to underloaded access points. The European Patent Application EP 2 696 622 A1 discloses that any combination of two or more specific parameters may be used as a definition of the load on a link between RNC and BS.

It is the object of the present invention to provide an improved method for handling overload situations in a mobile cellular network.

In accordance with the present invention, this object is initially solved by a method with the features of claim 1. Advantageous aspects of the method in accordance with the present invention are provided in the dependent claims.

According to claim 1 a method for handling an overload situation in a mobile cellular network separated into an access network, transport network and a core network is provided.

The mobile cellular network is preferable based on the 2G and/or 3G and/or 4G/LTE standard for mobile cellular networks. Therefore, the network comprises means for offering Global System for Mobile Communications (GSM), General Packet Radio Service (GPRS) / Enhanced Data Rates for GSM Evolution (EDGE), Universal Mobile Telecommunications System (UMTS), High Speed Packet Access (HSPA), Evolved High-Speed Packet Access (HSPA+) and Long Term Evolution (LTE) connections between the network and respective user terminals.

The access network side refers to the radio access network (RAN) in 2G systems, to the UMTS Terrestrial Radio Access Network (UTRAN) in 3G systems and the evolved UMTS Terrestrial Radio Access Network (eUTRAN) in 4G/LTE systems. The access network side includes all interfaces, entities or nodes responsible for the radio access of mobile terminals, in particular all air interfaces, terrestrial interfaces, Base Transceiver Station (BTS) or UMTS Base Station (NodeB) or LTE Base Station (e NodeB), Base Station Controller (BSC) or Radio Network Controller (RNC) levels. In 2G networks also the Transcoder and Rate Adaptation Unit (TRAU) is part of the access network.

The transport network comprises physical links, preferable microwave or fiber optics for the transmission of data between network entities. The performance of the transport network can be monitored in entities of the access or core network. Thus either the access or the core network has information about the blocking situation in the transport network.

Further, the method defines at least one blocking relevant criterion of the mobile cellular network which has to be monitored during operation of the network. Preferably, the criterion defines a certain interface, entity or node of the mobile cellular network which should be monitored. Further preferably, at least one blocking relevant criterion is defined dependent on the probability of a blocking event at said interface, entity or node.

The method further comprises the step of measuring at least one criterion related parameter and comparing the at least one measured parameter to a certain parameter threshold. Generally, said parameter is an indicator for predicting and/or detecting the occurrence of a possible blocking event at the point of measurement. The criterion related parameter is preferable a load based parameter characterising the actual traffic load at the point of measurement. It is possible that at least one measured parameter refers to the workload of a processor, the number of incoming service or traffic requests, the capacity utilisation etc..

At least one countermeasure for handling an overload situation is triggered if at least one measured parameter falls below or exceeds the respective parameter threshold.

Further, according to the invention at least one blocking relevant criterion is related to a possible blocking event at the access network side. State of the art technology assumes that congestion occurs either in the core network due to the high amount of Non-Access-Stratum (NAS) messages exchanged or in the controllers of the radio access network, i.e. Base Station Controllers or Radio Network Controllers.

Therefore, triggering conditions have been restricted to these events. However, in real networks blocking mainly occurs on the interfaces, nodes and entities being a part of the access or transport network. Therefore, at least one blocking related criterion is defined which allows to monitor a possible blocking event at the access network. Preferably, a blocking event at an interface, entity or node of the radio access network is noticeable and can be used for triggering appropriate countermeasures to reduce the traffic load in the mobile cellular network. In particular a blocking event is noticeable at one of the air interfaces, terrestrial interfaces or Base Transceiver Station or NodeB/eNodeB levels of the radio access network.

In accordance with an advantageous aspect of the invention at least one blocking relevant criterion is related to a blocking event at the air interface resources, in particular the Um interface for 2G networks and the Uu interface for 3G and 4G/LTE networks. Blocking at the air interface, in particular the Um interface can be caused due to a lack of Traffic Channels (TCH) and/or a lack of Packet Data Traffic Channels (PDTCHs) or due to bottlenecks on the signalling channel and/or the Stand-alone Dedicated Control Channel (SDCCH). Additionally, a blocking event at the air interface Uu can be caused by a lack of transmission power and/or a lack of available spreading codes and/or a lack of processing resources and/or capacity bottlenecks for signalling and/or the occurrence of uplink interference. Moreover, in 4G/LTE networks a blocking event at the Uu interface can be also caused due to a lack of physical resources, i.e. Physical Uplink Shared Channel (PUSCH) and Physical Uplink Control Channel (PUCCH) and Random Access Channel (RACH) in uplink direction as well as Physical Downlink Shared Channel (PDSCH) and Physical Downlink Control Channel (PDCCH) in downlink direction.

In accordance with another advantageous aspect of the invention at least one blocking relevant criterion is related to a blocking event at the BTS or NodeB or eNodeB. Blocking at the BTS can be caused by insufficient capacity in the baseband and radio frequency part, interface (IF) cards or a lack of processing power. Blocking on NodeB can occur due to a lack of Common NodeB Application Part (CNBAP) and/or missing signalling capacity of the NodeB. A blocking at the eNodeB level can be effected due to a lack of processing power and capacity bottlenecks on the interface cards as well as signalling processing.

In accordance with another advantageous aspect of the invention at least one blocking relevant criterion is related to a blocking event at one of the interfaces Abis, lub, lub-CS, luPS or S1. Blocking at the Abis interface for 2G networks can be caused due to a lack of physical resources on TRAU frames or Packet Control Unit (PCU) frames and/or due to missing signalling capacity for the Link Access Procedure on the D-channel (LAPD). The Abis interface is typically configured for lower capacity than it is regularly required for assigning highest data rate for Enhanced General Packet Radio Service (EGPRS) and highest data rates for speech services for Adaptive Multi-Rate speech codecs in wideband mode (AMR-WB) to each subscriber. Also with the introduction of EGPRS2 in 3GPP Release 7 and Voice services over Adaptive Multi-user channels on One Slot (VAMOS) in 3GPP Release 9 using Orthogonal Sub-Channels with AMR, a blocking event on the Abis interface is likely to occur if the capacity of this interface is not increased in the same way as necessary for the air interface using these enhancements. Further, a blocking event at the lub, lu-CS and luPS interfaces for 3G networks can be caused due to a lack of physical transmission resources and/or a lack of resources on the signalling channels. A blocking event at the S1 interface for LTE networks can be caused due to a lack of physical resources or signalling capacity.

In accordance with another advantageous aspect of the invention at least one blocking relevant criterion is related to a blocking event at the BSC and/or at the RNC. Blocking can occur at the BSC including interface cards, the switching system and the data processing part in the PCU. Blocking at the RNC for 3G networks is mainly related to user plane traffic, signalling plane traffic and the related interface cards.

In accordance with another advantageous aspect of the invention at least one blocking relevant criterion is related to a blocking event on the Ater- and/or A- and/or Gb- and/or Gn-interface. Blocking on Ater- and/or A- and/or Gb- and/or Gn-interfaces can occur due to a lack of physical transmission resources and/or a lack of resources on the signalling channels.

In accordance with another advantageous aspect of the invention at least one blocking relevant criterion is related to a blocking event at the TRAU and/or Mobile Switching Center (MSC) and/or the Serving GPRS Support Node (SGSN) and/or Gateway GPRS Support Node (GGSN) and/or Media Gateway (MGW) / MSC Server. Blocking at the TRAU for 2G networks can be caused due to a lack of resources on the transcoder cards and/or lack of processing power, transcoders or interface cards.

A blocking of the MSC can be caused due to capacity bottlenecks on the interface cards, switching system or processing power. Blocking at the SGSN is mainly related to capacity limitations on interface cards as well as data processing capability. Blocking events at the GGSN are affected due to capacity bottlenecks on the interface cards as well as data processing capability.

A blocking event at the MGW/MSC Server for 3G networks can be caused by capacity bottlenecks on the interface cards, switching system or processing power.

In accordance with another advantageous aspect of the invention at least one blocking relevant criterion is related to a blocking event caused by license limitations.

The wide definition of several blocking relevant criteria provides an enormous extension of the trigger conditions for automatic countermeasures for handling overload situations whenever blocking occurs in any part, entity or interface of the mobile network. Based on the invention and its advantageous aspects a solution is provided to allow effective overload handling irrespectively of the reason that causes blocking.

According to the invention at least one countermeasure is triggered if at least one measured parameter for a combination of blocking relevant criteria exceeds at least one certain threshold and/or a combination of certain thresholds. It is possible to combine random criteria to define several triggering conditions for appropriate countermeasures. For each combination of criteria there can be certain thresholds or combinations of a plurality of thresholds. The advantage aspect offers a flexible way to determine a satisfying number of triggering conditions allowing a reliable detection of possible blocking events throughout the whole network.

According to the invention a plurality of criteria and / or thresholds are combined by using at least one "AND" and / or "OR" condition.

In accordance with a particular aspect of the method at least one measured parameter of at least one blocking relevant criterion can be filtered before performing the threshold check. In particular, at least one measured parameter can be filtered by a moving average filter to obtain a smooth averaged value over a certain time interval. Ideally, the used filter might be reset after execution of at least one triggered countermeasure. After a reset the filter can be initialised with an updated default value.

The trigger condition for at least one blocking relevant criterion can be based on a hysteresis. The introduction of a hysteresis avoids frequent triggering between different countermeasures.

It might be desirable to pause between the execution of two countermeasures. Preferable, a timer is initiated after triggering at least one countermeasure. The execution of at least one further countermeasure is prohibited until expiration of the timer. The time interval defined by the timer might be adjustable. It is also possible to define certain timers depending on the countermeasure which was executed before or depending on the countermeasure which is intended to be executed.

In another advantageous aspect according to the invention at least one countermeasure can be chosen and executed depending on the monitored criterion or the combination of criteria or rather the exceeded threshold or a combination of thresholds. The method might perform an appropriate countermeasure for each criterion to selectively reduce the actual traffic load at certain points of the mobile cellular network. The selection of an appropriate countermeasure also provides a very fast and effective way for load reduction.

Possible countermeasures can be separated into at least two categories, for example into countermeasures delaying access requests of the subscribers or into countermeasures preventing subscriber access requests.

In a preferred aspect of the invention at least one wait timer is initialised as a countermeasure preventing the terminals or subscribers from sending additional resource or service request over a certain time interval. The wait timer is typically defined in a range up to 30 s, in particular up to 15 s. Preferable, the wait timer can be configured separately for different services that is to say different wait timers can be used for 2G, 3G or 4G networks.

Additionally or alternatively, a Backoff Timer can be defined as a countermeasure, typically in the range of up to 500 ms.

Additionally or alternatively, a dynamic adaptation of the network defined Persistence Level can be performed as a countermeasure. This functionality uses a random number generated by the user terminals/user equipment. If this number is equal or higher than a specific threshold, the terminal is allowed to access the network. If this number is lower than this threshold, the access request is rejected.

Preferable, a countermeasure for preventing subscriber access requests can be a temporary reduction of the access classes, in particular separated according to the traffic type. Each terminal or subscriber is allocated to a specified access class. The mobile network periodically broadcasts a list of allowable access classes for login into the mobile network. By adapting this broadcast information it is possible to control the number of terminals which gain access to the network. The number of requests for services and resources is effectively reduced. An overload situation in a mobile cellular network can be easily handled. Further, it can be possible to differentiate access control between CS and PS domains.

Another possible countermeasure performs an adjustment of the period for barring of specific access classes.

In accordance with the invention, the above-mentioned object is also solved by a mobile cellular network comprising means for performing the inventive method as specified above. Obviously, the network offers the same characteristics and benefits as the above mentioned method.

Further details and advantages of the invention will be explained in detail with reference to an embodiment illustrated in the drawings. It is shown in
- Figure 1:: an overview of the network architecture and interfaces of an inventive mobile cellular network and
- Figures 2 to 6:: several examples for blocking based criteria and countermeasures according to the invention.

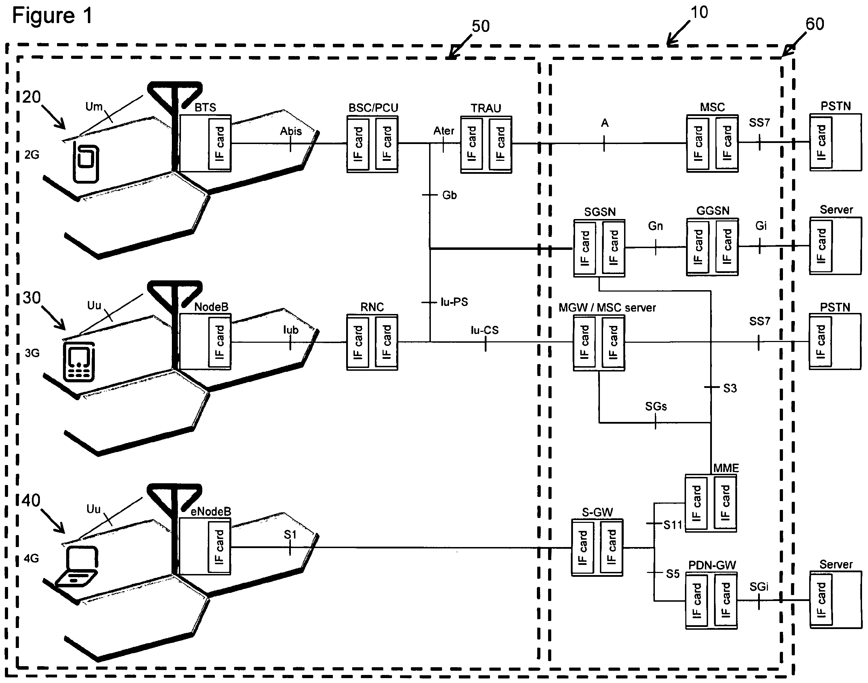

Figure 1 gives a short overview over the system architecture and interfaces of an embodiment of the inventive mobile cellular network 10. The network comprises interfaces, entities, nodes and processing units to implement a system applicable to operate according to one of the standards 2G, 3G or 4G/LTE. In particular, mobile connections according to GSM, GPRS/EDGE, UMTS, HSPA, HSPA+ and LTE can be established between at least one user terminal 20, 30, 40 and the mobile cellular network 10.

The mobile network can be separated into the access network 50 and the core network 60. The access network 50 implements the radio access technology for providing connections between mobile terminals 20, 30, 40 and the core network 60. The core network 60 provides various services to the terminals 20, 30, 40 which are connected over the access network 50. The transport network is part of the access network 50 and core network 60.

An overload situation can occur at any point of the depicted system architecture. Critical overload situations often lead to a blocking event which delays, interrupts or prevents any ongoing connection, service requests, etc..

The inventive mobile cellular network comprises means for performing the inventive method enabling a reliable detection of blocking events. In case of a successful detection a constructive countermeasure should be taken into account in order to reduce the overload situation and to overcome blocking events.

Therefore, the method offers an extension of triggering conditions for automatic access limitation whenever blocking occurs in any part, entity or interface of the mobile network. Consequently, a solution is provided to allow effective overload handling irrespectively of the reason that causes blocking. The method is applicable for 2G, 3G and 4G/LTE networks or any further developed network standards.

The major reasons for blocking in 2G networks are summarised in the following. The related interfaces are shown in Figure 1.
- Blocking of the Air interface (Um) resources caused due to lack of TCHs, lack of PDTCHs or bottlenecks on the signalling channel (SDCCH).
- Blocking in the BTS caused by insufficient capacity in the baseband and radio frequency part, interface cards or lack of processing power.
- Blocking on Abis interface due to lack of physical resources on TRAU frames or PCU frames or lack of signalling capacity for the LAPD-channel. Note that the Abis interface is typically configured for lower capacity than required for assigning highest data rate for EGPRS and highest data rates for speech services for AMR-WB to each subscriber. Also with the introduction of EGPRS2 and VAMOS using Orthogonal Sub-Channels with AMR, Abis blocking is likely to occur if the capacity of this interface is not increased in the same way as necessary for the air interface using these enhancements.
- Blocking at the BSC including interface cards, switching system and data processing part in the PCU.
- Blocking on Ater interface due to lack of physical transmission resources or resources on the signalling channels.
- Blocking at TRAU due to lack of resources on the transcoder cards, processing power, transcoders or interface cards.
- Blocking on A interface due to lack of physical transmission resources or resources on the signalling channels.
- MSC blocking due to capacity bottlenecks on the interface cards, switching system or processing power.
- Blocking on Gb interface due to lack of physical transmission resources or resources on the signalling channels.
- Blocking at Serving SGSN due to capacity limitations on interface cards as well as data processing capability.
- Blocking on Gn interface due to lack of physical transmission resources or resources on the signalling channels.
- GGSN blocking due to capacity bottlenecks on the interface cards as well as data processing capability.
- Blocking due to license limitations.

In addition to the blocking criteria previously described blocking events in 3G networks can also be caused by further aspects. The related interfaces are shown in Figure 1.
- Blocking on the Air interface (Uu) caused by lack of transmission power, uplink interference, spreading codes, processing resources and capacity bottlenecks for signalling.
- Blocking on NodeB due to lack of CNBAP or signalling capacity of the NodeB.
- Blocking in the RNC mainly related to user plane traffic, signalling plane traffic and the related interface cards.
- Blocking on lub, lu-CS and luPS interfaces due to lack of physical transmission resources or resources on the signalling channels.
- MGW and/or MSC Server blocking due to capacity bottlenecks on the interface cards, switching system or processing power.

In addition to the blocking criteria previously described for standards 2G and 3G blocking events in 4G/LTE networks are also caused by the following aspects. The interfaces are shown in Figure 1.
- Blocking on the Air interface (Uu) due to lack of physical resources, i.e. PUSCH, PUCCH and RACH in uplink direction as well as PDSCH and PDCCH in downlink direction.

- Blocking at eNodeB due to lack of processing power and capacity bottlenecks on the interface cards as well as signalling processing.
- Blocking on S1 interface due to lack of physical resources or signalling capacity. Note that LTE sites are mostly interconnected by sharing transport capacity with existing 2G/3G sites, carrying GSM/EDGE, UMTS Release 99 / HSPA and LTE traffic.
- Blocking at Serving Gateway (S-GW) due to lack of processing power and capacity bottlenecks on the interface cards as well as signalling processing.

Any of the mentioned blocking criteria or any combination between these criteria is/are used as at least one trigger condition for respective countermeasures. In contrast to the state of the art technologies, the inventive method introduces new load based thresholds and countermeasures to reduce the amount of service requests if the load exceeds specific thresholds.

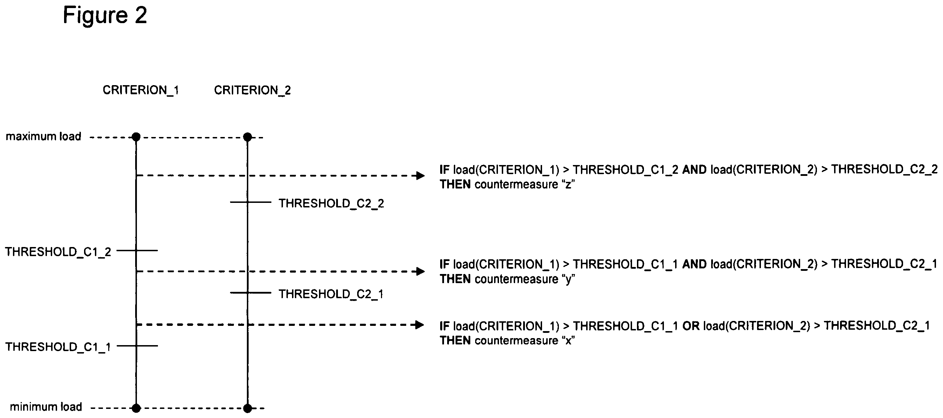

Multiple load criteria each of them aligned to one or several thresholds can optionally be combined via "AND" or "OR" conditions to a single trigger condition as exemplarily demonstrated in Figure 2. Two criteria CRITERION_1 and CRITERION_2 are combined over a logical "AND" interconnection. If the actual load of CRITERION_1 exceeds THRESHOLD_C1_2 and the load of CRITERION_2 exceeds THRESHOLD_C2_2 countermeasure "z" is triggered. If the actual load of CRITERION_1 exceeds THRESHOLD_C1_1 and the load of CRITERION_2 exceeds THRESHOLD_C2_1 countermeasure "y" is triggered. Two criteria CRITERION_1 and CRITERION_2 are combined over a logical "OR" interconnection. If the actual load of CRITERION_1 exceeds THRESHOLD_C1_1 or the load of CRITERION_2exceeds THRESHOLD_C2_1 countermeasure "x" is triggered. THRESHOLD C2_2 has the highest load level and THRESHOLD_C1_1 the lowest one.

The measured parameter for each defined criterion, in particular the actual load, is filtered via a moving average filter. The averaged value is compared to the respective threshold. The moving average filters are reset after each executed countermeasure and initialised with an updated default value. Further, a hysteresis is introduced to avoid frequent triggering between different countermeasures. After each executed countermeasure a penalty timer is started which prohibits execution of successive countermeasures until expiry of the defined time interval.

Countermeasures shall be applied depending on the criterion or combination of criteria that trigger the execution of the countermeasure. One countermeasure performs a temporary reduction of access classes. The reduction is separated according to the traffic type, i.e. CS or PS.

In the following the process for reducing access classes is described in more detail. During their production each Subscriber Identity Module (SIM) / Universal SIM (USIM) card is randomly assigned to one of ten access classes. The assigned class is stored on SIM/USIM. Special SIM cards additionally include a priority access class for privileged users. Each base station periodically broadcasts in the System Information Message information about the access classes that are allowed for login. All mobile terminals are programmed such that the consistency with access class stored on the SIM card is checked. If the related access class is (temporarily) not broadcasted, the information "no network available" is shown on the terminal's display.

According to 3GPP standardisation, broadcast messages should be available on a cell by cell basis indicating the class of subscribers barred from network access. It is possible to differentiate access control between CS and PS domains.

Based on the definitions all User Equipments (Ues) are members of one of ten randomly allocated mobile populations, defined as access classes 0 to 9. The population number is stored in the SIM/USIM. In addition, mobiles may be members of one or more special categories (access classes 11 to 15), also held in the SIM/USIM. These are allocated to specific high-priority users: class 11 (for Public Land Mobile Network (PLMN) use), class 12 (security services), class 13 (public utilities, e.g. water/gas suppliers), class 14 (emergency services) and class 15 (PLMN staff).

Besides the described reduction of access classes one countermeasure modifies the mentioned time period for barring of specific access classes which is described in the following. The mobile serving network shall be able to broadcast mean duration of access control and barring rates (e.g. percentage value) that commonly applied to access classes 0-9 to the UE. The same principle is applied for access classes 11-15.

The eUTRAN shall be able to support access control based on the type of access attempt (i.e. mobile originating data or mobile originating signalling), in which indications to the UEs are broadcasted to guide the behaviour of UE. eUTRAN shall be able to form combinations of access control based on the type of access attempt e.g. mobile originating and mobile terminating, mobile originating, or location registration. The "mean duration of access control" and the barring rate are broadcasted for each type of access attempts (i.e. mobile originating data or mobile originating signalling).

The UE determines the barring status with the information provided from the serving network, and performs the access attempt accordingly. The UE draws a uniform random number between 0 and 1 when initiating connection establishment and compares with the current barring rate to determine whether it is barred or not. When the uniform random number is less than the current barring rate and the type of access attempt is indicated allowed, the access attempt is allowed; otherwise the access attempt is not allowed. If the access attempt is not allowed, further access attempts of the same type are then barred for a time period that is calculated based on the "mean duration of access control" provided by the mobile network and the random number drawn by the UE.

The mentioned mechanisms prevent or delay the access of mobile terminals to the mobile network. Other countermeasure merely provokes a delay of terminal access for a certain time. Therefore, wait timers can be initiated to prevent the terminal from sending additional resource or service requests. In 3G networks mobile terminals are prohibited to send further Radio Resource Control (RRC) connection requests before expiry of this timer. Consequently less signalling traffic is generated in the network for a given period of time. According to the users' service expectations, short periods are the preferred choice for speech services, whereas longer periods can be configured for data services. The typical configuration of a wait timer is defined in a range up to 15 s.

Further countermeasures perform a dynamic adaptation of the network defined Persistence Level. This functionality uses a random number generated by the UE. If this number is equal or higher than a specific threshold, the UE is allowed to access the network. If this number is lower than this threshold, the access request is rejected.

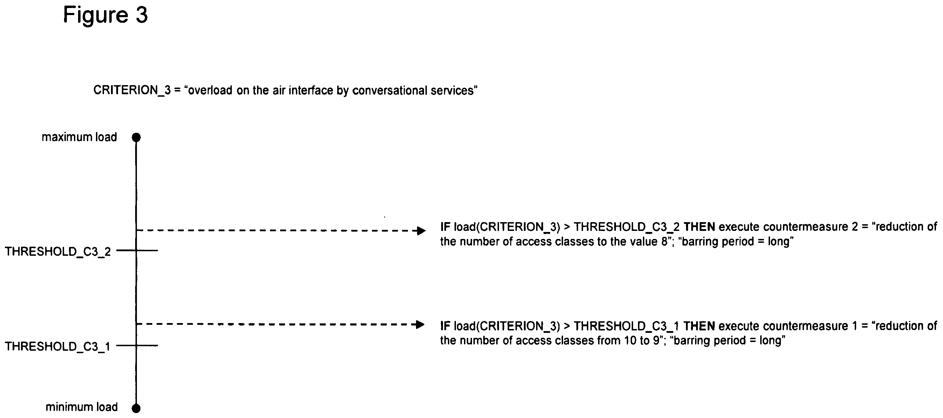

A representation of a possible defined trigger condition is depicted in Figure 3 which shows a single trigger criterion with two thresholds and counter measures. The trigger condition CRITERION_3 is defined as "overload on the air interface by conversational services (e.g. circuit-switched speech calls or packet-switched services of Quality of Services (QoS) traffic class 1)". For this criterion the expected call hold time is long and a reduction of the number of access classes from 10 to 9 shall be executed if the load exceeds THRESHOLD _C3 _1. A reduction to 8 access classes shall be executed if the load exceeds THRESHOLD_C3_2.

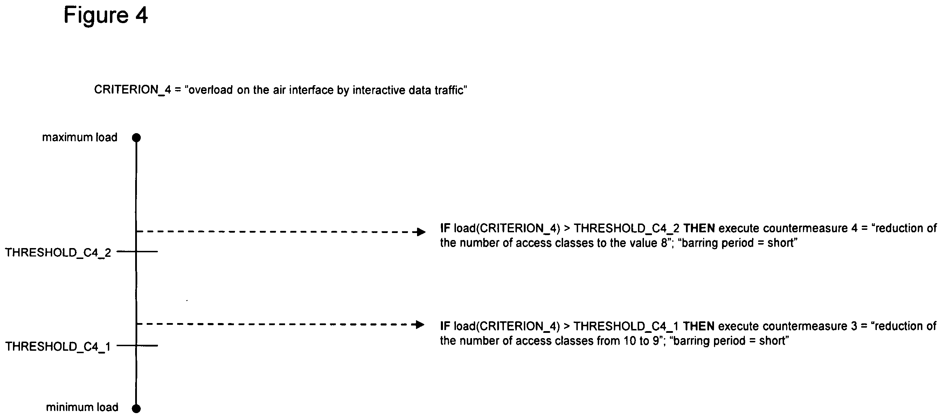

According to Figure 4 another trigger condition CRITERION_4 is defined as "overload on the air interface by interactive data traffic (packet-switched services of QoS traffic class 3)". The duration of packet calls is typically short and the periods during which specific access classes are barred shall be set to a shorter period than in the example for CRITERION_3 as depicted in Figure 3.

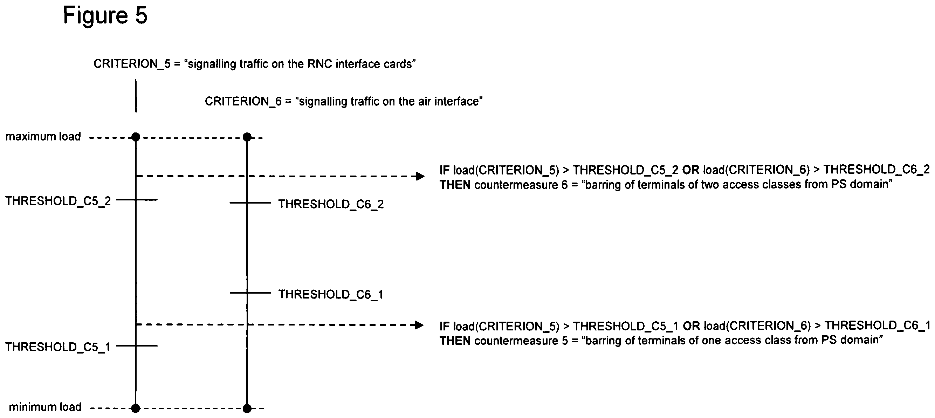

The example of Figure 5 shows a combination of two trigger criteria CRITERION_5 and CRITERION_6. CRITERION_5 is defined as "signalling traffic on the RNC interface cards" and combined over an "OR-combination" with CRITERION_6 which is defined as "signalling traffic on the air interface". The corresponding countermeasure shall bar terminals of some access classes from the PS domain only, as CS traffic causes less signalling.

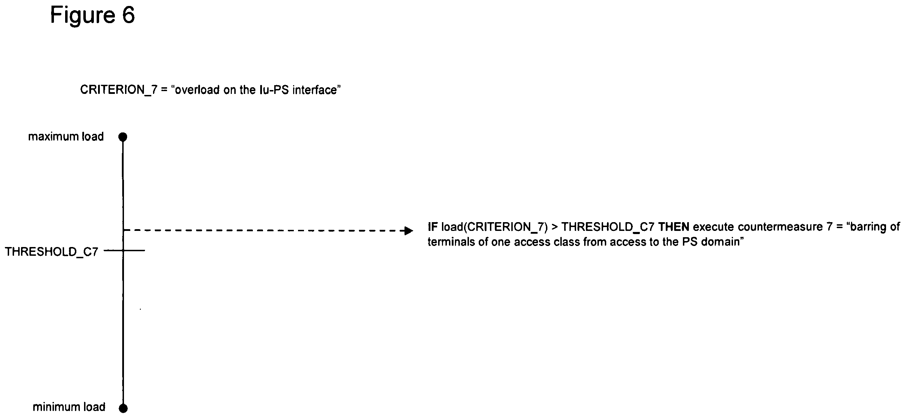

The last example of Figure 6 shows a single trigger criterion with one threshold and one related countermeasure. CRITERION_7 is defined as "overload on the lu-PS interface" and the corresponding countermeasure is barring of some access classes from access to the PS domain, as the user traffic for PS data services is typically higher than that of CS voice services.

Solutions based on the current state of technology are not flexible enough, as the trigger conditions for load control are restricted to a few events that cover only a small part of blocking caused in mobile live networks. Especially the events that currently lead to blocking are not considered as trigger conditions to restrict network access.

The invention describes a solution to handle extreme traffic load situations. These situations do not occasionally occur; due to growing traffic in mobile networks their occurrence becomes more and more frequent. The important aspect of this invention is that an automatism is provided that covers any reason of blocking to overcome signalling overload and to auto-stabilise the network. Previous solutions were restricted to a few trigger criteria not being sufficient for today's as well as future data traffic dominated networks. The invention suggests an extension of load measurements on all interfaces and sub-parts of network entities on which blocking might occur with the aim to use this information for load control.

## Claims

1. A method for handling an overload situation in a mobile cellular network (10) based on one of the standards 2G, 3G or 4G/LTE and which is separated into an access network (50), a transport network and a core network (60), wherein at least one blocking relevant criterion of the mobile cellular network (10) is monitored by measuring at least one criterion related parameter and comparing the at least one measured parameter to a certain parameter threshold, and wherein at least one countermeasure for overcoming a blocking event is triggered if the at least one measured parameter falls below or exceeds the respective parameter threshold, wherein the at least one blocking relevant criterion is related to a possible blocking event at the access network and the possible blocking event is related to an overload situation,
**characterised in**
**that** at least one blocking relevant criterion is related to a possible blocking event in a BTS or NodeB or eNodeB of the access network (50) wherein the at least one countermeasure is triggered if measured parameters for a combination of blocking relevant criteria exceed at least one respective parameter threshold and/or a combination of respective parameter thresholds and wherein the multiple criteria and/or thresholds are combined by at least one AND and/or OR condition, wherein the at least one countermeasure is applied depending on the combination of criteria triggering the execution of a countermeasure and wherein the at least one countermeasure performs a temporary reduction of the access classes, and/or initiates a wait timer preventing terminals from sending additional resource and/or service requests.

2. The method according to claim 1, wherein the at least one blocking relevant criterion is related to a possible blocking event caused at air interface resources of the access network (50).

3. The method according to one of the preceding claims, wherein the at least one blocking relevant criterion is related to a possible blocking event on one of interfaces Abis, lub, lub-CS, luPS or S1.

4. The method according to claim 1, wherein the at least one blocking relevant criterion is related to a possible blocking event at a BSC and/or at an RNC.

5. The method according to one of the preceding claims, wherein the at least one blocking relevant criterion is related to a possible blocking event on a Ater- and/or A- and/or Gb- and/or Gn-interface.

6. The method according to one of the preceding claims, wherein the at least one blocking relevant criterion is related to a possible blocking event at a Transcoder and Rate Adaptation Unit, TRAU, and/or Mobile Switching Center and/or Serving GPRS Support Node and/or Gateway GPRS Support Node and/or Media Gateway and/or MSC Server and/or Serving Gateway.

7. The method according to one of the preceding claims, wherein the at least one blocking relevant criterion is related to a possible blocking event due to license limitations.

8. The method according to any of the preceding claims, wherein at least one of the measured parameters for the combination of blocking relevant criterion is filtered before comparing it to at least a respective parameter threshold by a moving average filter, wherein a filter reset is executed after initiating at least one countermeasure.

9. The method according to any of the preceding claims, wherein the trigger condition for at least one blocking relevant criterion is based on a hysteresis.

10. The method according to any of the preceding claims, wherein after triggering the at least one countermeasure a penalty timer is initiated prohibiting any further countermeasures over a predefined time interval.

11. The method according to any of the preceding claims wherein the at least one countermeasure performs a modification of a time period for barring of specific access classes.

12. A mobile cellular network (10) comprising means for performing the method according to any of the preceding claims.

## Patentansprüche

1. Verfahren zur Handhabung einer Überlastsituation in einem Mobilfunknetz (10) basierend auf den Standards 2G, 3G oder 4G/LTE und welches in ein Zugangsnetz (50), ein Transportnetz und ein Kernnetz (60) unterteilt ist, wobei zumindest ein blockaderelevantes Kriterium des Mobilfunknetzes (10) durch Messen von zumindest einem Kriterium-bezogenen Parameter und Vergleich des zumindest einen gemessenen Parameters mit einem bestimmten Parametergrenzwert überwacht wird, und wobei zumindest eine Gegenmaßnahme zur Überwindung eines Blockadeereignisses ausgelöst wird, falls der zumindest eine gemessene Parameter unter den jeweiligen Parametergrenzwert fällt oder diesen übersteigt, wobei das zumindest eine blockaderelevante Kriterium mit einem möglichen Blockadeereignis an dem Zugangsnetz in Beziehung steht und das mögliche Blockadeereignis mit einer Überlastsituation in Beziehung steht,
**dadurch gekennzeichnet, dass** zumindest ein blockaderelevantes Kriterium mit einem möglichen Blockadeereignis in einem BTS oder NodeB oder eNodeB des Zugangsnetzes (50) in Beziehung steht, wobei die zumindest eine Gegenmaßnahme ausgelöst wird, falls gemessene Parameter für eine Kombination aus blockaderelevanten Kriterien zumindest einen jeweiligen Parametergrenzwert und/oder eine Kombination von jeweiligen Parametergrenzwerten übersteigen, und wobei die mehreren Kriterien und/oder Grenzwerte durch zumindest eine UND und/oder ODER-Bedingung verknüpft sind, wobei die zumindest eine Gegenmaßnahme in Abhängigkeit von der Kombination von Kriterien, die die Ausführung einer Gegenmaßnahme auslösen, angewendet wird, und wobei die zumindest eine Gegenmaßnehme eine vorübergehende Verringerung der Zugangsklassen durchführt, und/oder einen Wartezeitnehmer initiiert, der verhindert, dass Anschlüsse zusätzliche Ressourcen- und/oder Dienstanfragen senden.

2. Verfahren nach Anspruch 1, wobei das zumindest eine blockaderelevante Kriterium mit einem möglichen Blockadeereignis in Beziehung steht, das an Luftschnittstellen-Ressourcen des Zugangsnetzes (50) verursacht wird.

3. Verfahren nach einem der vorstehenden Ansprüche, wobei das zumindest eine blockaderelevante Kriterium mit einem möglichen Blockadeereignis von einer der Schnittstellen Abis, Iub, Iub-CS, IuPS oder S1 in Beziehung steht.

4. Verfahren nach Anspruch 1, wobei das zumindest eine blockaderelevante Kriterium mit einem möglichen Blockadeereignis an einem BSC und/oder einem RNC in Beziehung steht.

5. Verfahren nach einem der vorstehenden Ansprüche, wobei das zumindest eine blockaderelevante Kriterium mit einem möglichen Blockadeereignis an einer Ater- und/oder A- und/oder Gb- und/oder Gn-Schnittstelle in Beziehung steht.

6. Verfahren nach einem der vorstehenden Ansprüche, wobei das zumindest eine blockaderelevante Kriterium mit einem möglichen Blockadeereignis an einer TRAU (Transcoder and Rade Adaption Unit, auch: Transcodierungseinheit) und/oder Mobilfunkvermittlungsstelle (Mobile Switching Center) und/oder Serving GPRS Support Node und/oder Gateway GPRS Support Node und/oder Media Gateway und/oder MSC Server und/oder Serving Gateway in Beziehung steht.

7. Verfahren nach einem der vorstehenden Ansprüche, wobei das zumindest eine blockaderelevante Kriterium mit einem möglichen Blockadeereignis aufgrund von Lizenzbeschränkungen in Beziehung steht.

8. Verfahren nach einem der vorstehenden Ansprüche, wobei zumindest einer der gemessenen Parameter für die Kombination von blockaderelevantem Kriterium, bevor er mit zumindest einem jeweiligen Parametergrenzwert verglichen wird, vermittels eines Filters eines gleitenden Durchschnitts gefiltert wird, wobei eine Filterzurücksetzung nach der Initiierung von zumindest einer Gegenmaßnahme ausgeführt wird.

9. Verfahren nach einem der vorstehenden Ansprüche, wobei die Auslösebedingung für zumindest ein blockaderelevantes Kriterium auf einer Hysterese basiert.

10. Verfahren nach einem der vorstehenden Ansprüche, wobei nach dem Auslösen der zumindest einen Gegenmaßnahme ein Strafzeitnehmer initiiert wird, der jedwede weitere Gegenmaßnahmen über ein vorgegebenes Zeitintervall unterbindet.

11. Verfahren nach einem der vorstehenden Ansprüche, wobei die zumindest eine Gegenmaßnahme eine Modifikation einer Zeitperiode zur Sperrung von spezifischen Zugangsklassen durchführt.

12. Mobilfunknetz (10), aufweisend Mittel zur Durchführung des Verfahrens nach einem der vorstehenden Ansprüche.

## Revendications

1. Procédé de gestion d'une situation de surcharge dans un réseau cellulaire mobile (10) reposant sur l'un des standards 2G, 3G ou 4G/LTE et qui est séparé en un réseau d'accès (50), un réseau de transport et un réseau central (60), dans lequel au moins un critère associé au blocage du réseau cellulaire mobile (10) est contrôlé par la mesure d'au moins un paramètre relatif au critère et la comparaison de l'au moins un paramètre mesuré à un certain seuil de paramètre, et dans lequel au moins une contre-mesure pour résoudre un événement de blocage est déclenchée si l'au moins un paramètre mesuré passe sous ou dépasse le seuil de paramètre respectif, dans lequel l'au moins un critère associé au blocage est associé à un possible événement de blocage au niveau du réseau d'accès et le possible événement de blocage est associé à une situation de surcharge,
**caractérisé en ce qu'**au moins un critère associé au blocage est associé à un possible événement de blocage dans une BTS ou un NodeB ou eNodeB du réseau d'accès (50) dans lequel l'au moins une contre-mesure est déclenchée si des paramètres mesurés pour une combinaison de critères associés au blocage dépassent au moins un seuil de paramètre respectif et/ou une combinaison de seuils de paramètre respectifs et dans lequel les multiples critères et/ou seuils sont combinés par au moins une condition ET et/ou OU, dans lequel l'au moins une contre-mesure est appliquée en fonction de la combinaison de critères déclenchant l'exécution d'une contre-mesure et dans lequel l'au moins une contre-mesure réalise une réduction temporaire des classes d'accès, et/ou initie un synchroniseur d'attente empêchant l'envoi par des terminaux de demandes de ressources et/ou de services supplémentaires.

2. Procédé selon la revendication 1, dans lequel l'au moins un critère associé au blocage est associé à un possible événement de blocage provoqué au niveau de ressources d'interface Hertzienne du réseau d'accès (50).

3. Procédé selon l'une des revendications précédentes, dans lequel l'au moins un critère associé au blocage est associé à un possible événement de blocage sur l'une d'interfaces Abis, Iub, Iub-CS, IuPS ou S1.

4. Procédé selon la revendication 1, dans lequel l'au moins un critère associé au blocage est associé à un possible événement de blocage au niveau d'un BSC et/ou au niveau d'un RNC.

5. Procédé selon l'une des revendications précédentes, dans lequel l'au moins un critère associé au blocage est associé à un possible événement de blocage sur une interface Ater et/ou A et/ou Gb et/ou Gn.

6. Procédé selon l'une des revendications précédentes, dans lequel l'au moins un critère associé au blocage est associé à un possible événement de blocage au niveau d'une unité de transcodage et d'adaptation de débit, TRAU, et/ou d'un centre de commutation mobile et/ou d'un nœud de support GPRS de service et/ou d'un nœud de support GPRS de passerelle et/ou d'une passerelle média et/ou d'un serveur MSC et/ou d'une passerelle de service.

7. Procédé selon l'une des revendications précédentes, dans lequel l'au moins un critère associé au blocage est associé à un possible événement de blocage en raison de limitations d'autorisation.

8. Procédé selon l'une quelconque des revendications précédentes, dans lequel au moins l'un des paramètres mesurés pour la combinaison de critères associés au blocage est filtré avant sa comparaison à au moins un seuil de paramètre respectif par un filtre moyen mobile, dans lequel une réinitialisation de filtre est exécutée après l'initiation d'au moins une contre-mesure.

9. Procédé selon l'une quelconque des revendications précédentes, dans lequel la condition de déclenchement pour au moins un critère associé au blocage repose sur une hystérésis.

10. Procédé selon l'une quelconque des revendications précédentes, dans lequel après le déclenchement de l'au moins une contre-mesure, un synchroniseur de pénalité est initié pour interdire toute autre contre-mesure sur un intervalle de temps prédéfini.

11. Procédé selon l'une quelconque des revendications précédentes dans lequel l'au moins une contre-mesure réalise une modification d'une période pour l'interdiction de classes d'accès spécifiques.

12. Réseau cellulaire mobile (10) comprenant des moyens pour réaliser le procédé selon l'une quelconque des revendications précédentes.
